# EUROPÄISCHE PATENTSCHRIFT

(11) **EP 3 024 695 B1**
(45) Veröffentlichungstag und Bekanntmachung des Hinweises auf die Patenterteilung: **23.09.2020**
(21) Anmeldenummer: 14713053.8
(22) Anmeldetag: 17.03.2014
(51) Int. Cl.: B60Q 3/64, B60Q 3/74

(54) **FAHRZEUGLEUCHTE ZUR BELEUCHTUNG DES INNENRAUMS EINES FAHRZEUGS**
VEHICLE LIGHT FOR LIGHTING THE INTERIOR OF A VEHICLE
LAMPE DE VÉHICULE SERVANT À ÉCLAIRER L'HABITACLE D'UN VÉHICULE

(30) Priorität: 23.07.2013 DE 102013012228
(43) Veröffentlichungstag der Anmeldung: 01.06.2016
(73) Patentinhaber: Volkswagen Aktiengesellschaft, 38440 Wolfsburg (DE)
(72) Erfinder: STUDENY, Christian, 38440 Wolfsburg (DE); PREOBRASCHENSKI, Alexej, 38442 Wolfsburg (DE)
(86) Internationale Anmeldenummer: PCT/EP2014/055237
(87) Internationale Veröffentlichungsnummer: WO 2015/010798

(56) Entgegenhaltungen:
- WO-A1-2012/133375
- WO-A1-2012/164696
- DE-A1-102010 032 946
- DE-A1-102010 049 408
- DE-A1-102011 014 923
- JP-A- 2005 186 884
- US-A1- 2006 215 414

## Beschreibung

Die vorliegende Erfindung betrifft eine Fahrzeugleuchte zur Beleuchtung des Innenraums eines Fahrzeugs, mit zumindest einer ersten Lichtquelle und einem flächigen Maskierelement, dessen eine Seite zu einer dem Innenraum des Fahrzeugs abgewandten Seite ausgerichtet ist und dessen andere Seite zu einer dem Innenraum des Fahrzeugs zugewandten Seite ausgerichtet ist. Ferner umfasst die Fahrzeugleuchte einen Lichtleitkörper, welcher eine Lichteinkoppelfläche auf der dem Innenraum des Fahrzeugs abgewandten Seite des Maskierelements aufweist, bei der die erste Lichtquelle angeordnet ist und in welche die Lichtemission der Lichtquelle eingekoppelt wird, und welcher eine Lichtauskoppelfläche auf der dem Innenraum des Fahrzeugs zugewandten Seite des Maskierelements aufweist, bei welcher das eingekoppelte Licht in den Innenraum des Fahrzeugs ausgekoppelt wird, wobei sich der Lichtleitkörper von der dem Innenraum des Fahrzeugs abgewandten Seite zu der dem Innenraum des Fahrzeugs zugewandten Seite um das Maskierelement herum erstreckt, wobei das Maskierelement zumindest eine Öffnung aufweist und an der dem Fahrzeuginnenraum abgewandten Seite des Maskierelements zumindest eine zweite Lichtquelle bei der Öffnung angeordnet ist, deren Lichtemission durch die Öffnung und durch den Lichtleitkörper hindurch in den Fahrzeuginnenraum gelangt.

Aus der EP 1 663 712 B1 ist eine Dachhimmelleuchte für ein Fahrzeug bekannt. Die Leuchte umfasst einen Lichtleiter und ein Leuchtmittel, deren Licht in eine Stirnfläche des Lichtleiters eingespeist wird. Der Lichtleiter ist plattenförmig ausgebildet und strahlt Licht flächig in den Innenraum des Fahrzeugs ab.

Aus der DE 10 2008 008 180 A1 ist eine Innenraumbeleuchtung für ein Kraftfahrzeug bekannt, welche ein Leuchtmittel und einen Lichtleiter umfasst, in den das Leuchtmittel Licht einkoppelt. Der Lichtleiter verläuft im Wesentlichen parallel zu einer Seitenkante eines transparenten plattenförmigen Flächenleuchtelements. An der Stirnfläche des Lichtleiters eingekoppeltes Licht wird seitlich zur Seitenkante des Flächenleuchtelements hin abgestrahlt, wobei das Licht über die Seitenkante in das Flächenleuchtelement eingekoppelt und über seine Abstrahlfläche abgestrahlt wird.

Aus der DE 102 04 359 A1 ist ein Fahrzeugdach bekannt, das ein Dachteil und ein unter dem Dachteil vorgesehenes Leuchtfeld umfasst, welches durch Anstrahlen mittels Licht aus einer Beleuchtungseinrichtung gebildet ist.

Aus der DE 10 2006 055 142 A1 ist eine Fahrzeugraumlampe bekannt, welche einen Schachtel-ähnlichen Körper, eine Lichtquelle, aufgenommen innerhalb des Schachtel-ähnlichen Körpers, einen Schalter, vorgesehen innerhalb des Schachtel-ähnlichen Körpers, und einen licht-transmittierenden Bereich, der an dem Schachtel-ähnlichen Körper an einer Öffnung vorgesehen ist, umfasst.

Aus der EP 1 293 382 B1 ist eine Beleuchtungsanordnung zur Beleuchtung des Innenraums eines Fahrzeugs. Die Anordnung weist zwei räumlich voneinander getrennte Lichtquellen auf. Dabei erzeugen beide Lichtquelle einen Lichtspot.

Aus der DE 10 2010 032 946 A1 ist eine Beleuchtungseinrichtung bekannt, welche eine Leseleuchte mit einem ersten Leuchtmittel und eine Innenleuchte mit einem zweiten Leuchtmittel aufweist. Das zweite Leuchtmittel stellt dabei eine Flächenleuchte bereit.

Schließlich ist aus der DE 10 2011 014 923 A1 eine Fahrzeugleuchte zur Beleuchtung des Innenraums eines Fahrzeugs mit einer Lichtquelle und einem Lichtleitkörper bekannt. Der Lichtleitkörper weist dabei eine Lichteinkoppelfläche auf, in welche die Lichtemission der Lichtquelle eingekoppelt wird. Weiterhin weist die Fahrzeugleuchte eine Lichtauskoppelfläche auf, aus der das Licht in den Innenraum des Fahrzeugs ausgekoppelt wird. Nachteilig an dieser Fahrzeugleuchte ist, dass Leuchten, welche eine gerichtete Lichtemission, beispielsweise zur Erzeugung eines Lichtspots, separat verbaut werden müssen.

JP2005186884 A offenbart eine gattungsgemäße Fahrzeugleuchte zur Beleuchtung des Innenraums des Fahrzeugs.

Es ist daher die Aufgabe der vorliegenden Erfindung eine Fahrzeugleuchte der eingangs genannten Art bereitzustellen, mit welcher eine homogene Ausleuchtung des Fahrzeuginnenraums bereitgestellt werden und gleichzeitig definierte Leuchtfelder zum Ausleuchten von Objekten bereitgestellt werden können.

Erfindungsgemäß wird diese Aufgabe durch eine Fahrzeugleuchte mit den Merkmalen des Anspruchs 1 gelöst. Vorteilhafte Ausgestaltungen und Weiterbildungen ergeben sich aus den abhängigen Ansprüchen.

Die erfindungsgemäße Fahrzeugleuchte ist dadurch gekennzeichnet, dass der Lichtleitkörper auf der dem Innenraum des Fahrzeugs abgewandten Seite des Maskierelements eine Aussparung benachbart zu der Öffnung des Maskierelements aufweist, welche die zweite Lichtquelle zumindest teilweise aufnimmt.

Unter einem Lichtleitkörper im Sinne der vorliegenden Erfindung wird ein Körper verstanden, in welchem ein über die Lichteinkoppelfläche eintretender Lichtstrahl zumindest einmal durch Totalreflexion reflektiert wird. Bei dem Lichtleitkörper kann es sich somit beispielsweise um einen Lichtleiter handeln.

Durch das Maskierelement der erfindungsgemäßen Fahrzeugleuchte erreicht man, dass der Betrachter, welcher die Fahrzeugleuchte vom Innenraum des Fahrzeugs her betrachtet, die erste Lichtquelle nicht direkt sehen kann, da sie hinter dem lichtundurchlässigen Maskierelement angeordnet ist. Das Licht der Lichtquelle wird jedoch nach der Einkoppelung in den Lichtleitkörper im Wesentlichen um 180° um das Maskierelement herumgeleitet, sodass mittels des Lichtleitkörpers auf der dem Innenraum des Fahrzeugs zugewandten Seite des Maskierelements ein Flächenstrahler realisiert werden kann, der eine großflächige und homogene Lichtemission in Richtung des Fahrzeuginnenraums bereitstellt. Dabei ist der über die Größe der Lichtauskoppelfläche hinaus gehende Bauraum der Fahrzeugleuchte minimal. Es ist nur ein kleiner Bereich seitlich neben dem Maskierelement erforderlich, um das Licht in dem Lichtleitkörper um das Maskierelement herum zu leiten. Außerdem stellt die erfindungsgemäße Fahrzeugleuchte eine sehr große Flexibilität für die Ausgestaltung der Lichteinkoppelung bereit, da diese vollständig von dem Maskierelement verdeckt ist. Die Lichteinkoppelung kann somit sehr einfach an die Bauraumverhältnisse im Innenraum des Fahrzeugs angepasst werden.

Eine Öffnung in dem Maskierelement gewährleistet auf einfache Weise, dass die Lichtemission der zweiten Lichtquelle, welche ebenso auf der dem Fahrzeuginnenraum abgewandten Seite angeordnet ist, in den Fahrzeuginnenraum gelangen kann.

Der Lichtleitkörper weist auf der dem Innenraum des Fahrzeugs abgewandten Seite des Maskierelements eine Aussparung benachbart zu der Öffnung des Maskierelements auf, welche die zweite Lichtquelle zumindest teilweise aufnimmt. Dadurch kann die zweite Lichtquelle sehr nah an der Lichtauskoppelfläche des Lichtleitkörpers angeordnet werden. Dies wiederum gewährleistet, dass das Licht der zweiten Lichtquelle lediglich einen kurzen Weg durch den Lichtleitkörper zurücklegen muss. Es wird daher so wenig wie möglich vom Lichtleitkörper beeinflusst.

Gemäß einer anderen Weiterbildung der erfindungsgemäßen Fahrzeugleuchte umfasst der Lichtleitkörper zumindest zwei aneinandergefügten Platten, wobei die erste Platte auf der dem Innenraum des Fahrzeugs abgewandten Seite und die zweite Platte auf der dem Innenraum des Fahrzeugs zugewandten Seite angeordnet ist, wobei sich die Lichteinkoppelfläche an der ersten Platte und die Lichtauskoppelfläche an der zweiten Platte befindet und das Maskierelement zwischen der ersten und der zweiten Platte angeordnet ist. Durch die Ausbildung des Lichtleitkörpers mit zwei Platten kann das Maskierelement auf einfache Weise in den Lichtleitkörper integriert werden und das in die erste Platte eingekoppelte Licht auf einfache Weise um das Maskierelement herum geleitet werden.

Insbesondere umfasst der Lichtleitkörper an der dem Fahrzeuginnenraum zugewandten Seite des Maskierelements Auskoppelstrukturen, welche eine flächige Lichtauskoppelung der Lichtemission der ersten Lichtquelle bereitstellen, wobei bei der Öffnung des Maskierelements keine Auskoppelstrukturen angeordnet sind. Die Auskoppelstrukturen sind hier unterbrochen. Durch die Unterbrechung der Auskoppelstrukturen bei der Öffnung des Maskierelements wird gewährleistet, dass das Licht der zweiten Lichtquelle nicht an Auskoppelstrukturen gebrochen wird. Dadurch kann das Licht der zweiten Lichtquelle ungehindert durch den Lichtleitkörper durchtreten. Insbesondere wird kein Licht der zweiten Lichtquelle so in den Lichtleitkörper eingekoppelt, dass es als diffuses Licht abgestrahlt wird.

Unter einer diffusen Lichtabstrahlung wird im Sinne der Erfindung verstanden, dass die Lichtemission nicht gerichtet ist, sondern aufgrund einer Vielzahl von Streuzentren in eine Vielzahl von unterschiedlichen Richtungen erfolgt.

Bevorzugt ist der Lichtleitkörper derart ausgebildet, dass Licht, welches von der zweiten Lichtquelle emittiert wird, nicht in den Lichtleitkörper eingekoppelt wird. Dadurch wird verhindert, dass in dem Lichtleitkörper, welcher eine homogenes Flächenlicht bereitstellt, Inhomogenitäten auftreten, die zu einer inhomogenen Auskopplung des bei der Lichtauskoppelfläche ausgekoppelten Lichts führen. Die Lichtauskopplung bei der Lichtauskoppelfläche des Lichtleitkörpers ist dann unabhängig davon, ob eine zweite Lichtquelle in die Aussparung des Lichtleitkörper auf der dem Fahrzeuginnenraum bezüglich des Maskierelements abgewandten Seite aufgenommen ist.

Bevorzugt weist die Fahrzeugleuchte ein Gehäuse und einen Rahmen auf, wobei die erste Lichtquelle, der Lichtleitkörper mit dem Maskierelement und die zweite Lichtquelle zwischen dem Gehäuse und dem Rahmen geklemmt gehalten werden. Dadurch werden separate Bauteile zum Zusammenbau der Fahrzeugleuchte überflüssig. Die Fahrzeugleuchte kann dadurch vorteilhafterweise auf kostengünstige Weise hergestellt werden.

Bevorzugt ist in Lichtemissionsrichtung vor der zweiten Lichtquelle eine Linse angeordnet ist. Besonders bevorzugt ist die Linse dicht bei der Lichtauskoppelfläche angeordnet. Durch die Linse wird gewährleistet, dass das Licht der zweiten Lichtquelle als gerichtete Lichtemission in den Innenraum des Fahrzeugs gelangt. Es wird dadurch ein definiertes Leuchtfeld erzeugt, welches bevorzugt dazu geeignet ist, ein Objekt, beispielsweise ein Buch, auszuleuchten. Die zweite Lichtquelle stellt also insbesondere ein Leselicht bereit. Vorteilhafterweise kombiniert die erfindungsgemäße Fahrzeugleuchte ein Flächenlicht mit einem Leselicht. Ein Leselicht muss demnach nicht mehr separat eingebaut werden. Dadurch werden vorteilhafterweise Bauraum und Kosten gespart.

Erfindungsgemäß wird ferner ein Fahrzeug mit einer Fahrzeugleuchte bereitgestellt, wie sie vorstehend beschrieben wurde. Die Fahrzeugleuchte stellt insbesondere eine Decken- oder Himmelbeleuchtung für den Innenraum des Fahrzeugs bereit. Unter einem Fahrzeughimmel ist im Sinne der Erfindung eine mit einer Verkleidung ausgestattete Fahrzeugdecke verstanden. In der Regel weisen moderne Fahrzeuge eine Deckenverkleidung auf.

Die Erfindung wird nun anhand von Ausführungsbeispielen mit Bezug zu den Zeichnungen erläutert.
- Figur 1: zeigt schematisch ein Fahrzeug mit einem Ausführungsbeispiel der erfindungsgemäßen Fahrzeugleuchte,
- Figur 2: zeigt ein Ausführungsbeispiel des Lichtleitkörpers der erfindungsgemäßen Fahrzeugleuchte,
- Figur 3: zeigt einen vergrößerten Teilausschnitt der erfindungsgemäßen Fahrzeugleuchte,
- Figur 4: zeigt ein Ansicht der Fahrzeugleuchte in Betrachtungsrichtung von dem Fahrzeuginnenraum zu der erfindungsgemäßen Fahrzeugleuchte,
- Figur 5: zeigt eine zusammengebaute erfindungsgemäße Fahrzeugleuchte entlang der Linie A - A aus Figur 6 und
- Figur 6: zeigt eine perspektivische Ansicht der zusammengebauten erfindungsgemäßen Fahrzeugleuchte.

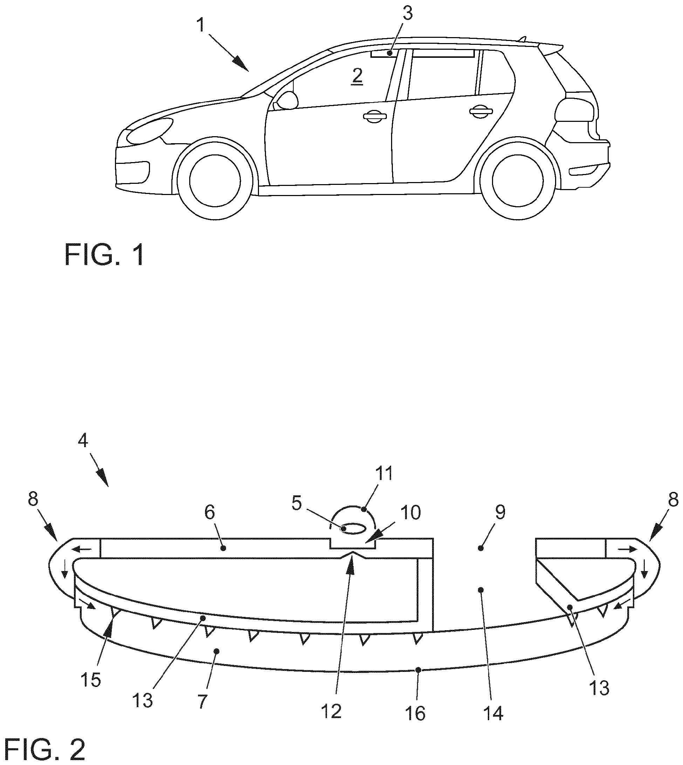

In Figur 1 ist ein Fahrzeug 1 dargestellt, bei welchem ein Ausführungsbeispiel der erfindungsgemäßen Fahrzeugleuchte 3 im Bereich der Decke bzw. des Dachhimmels im Innenraum 2 des Fahrzeugs 1 angeordnet ist. Die Fahrzeugleuchte 3 dient dabei sowohl als Flächenlicht als auch als Leselicht.

Figur 2 zeigt ein Ausführungsbeispiel des Lichtleitkörpers 4 der erfindungsgemäßen Fahrzeugleuchte 3, der eine erste Platte 6, eine zweite Platte 7 und die Abschnitte 8 aufweist, welche die beiden Platten 6 und 7 miteinander verbinden. Der Lichtleitkörper 4 weist bei der Platte 6 eine Lichteinkoppelfläche 10 auf, über welche die Lichtemission einer ersten Lichtquelle 5 in die erste Platte 6 des Lichtleitkörpers 4 eingekoppelt wird. Um einen möglichst großen Anteil der Lichtemission der ersten Lichtquelle 5 in die erste Platte 6 einzukoppeln, kann ein Reflektor 11 vorgesehen sein, welcher Lichtstrahlen, die von der ersten Lichtquelle 5 emittiert werden und die nicht in Richtung der Lichteinkoppelfläche 10 gerichtet sind, so reflektiert, dass sie über die Lichteinkoppelfläche 10 in die erste Platte 6 eingekoppelt werden. Die erste Lichtquelle 5 ist insbesondere eine Leuchtdiode.

Gegenüberliegend von der Lichteinkoppelfläche 10 ist ein optisches Umlenkelement 12 ausgebildet, welches bewirkt, dass ein Teil der Lichtemission der ersten Lichtquelle 5, die über die Lichteinkoppelfläche 10 eingekoppelt wurde, in Richtung der Abschnitte 8 geleitet wird. Bei dem optischen Umlenkelement 12 kann es sich beispielsweise um ein Umlenkprisma handeln, welches beispielsweise durch eine dreieckige Einkerbung in der Platte 6 gebildet ist.

Die erste Platte 6 des Lichtleitkörpers 4 ist als Lichtleiter ausgebildet, sodass die über die Lichteinkoppelfläche 10 eingekoppelten Lichtstrahlen durch Totalreflexion zu den Abschnitten 8 geleitet werden. Bei den Abschnitten 8 wird die Lichtausbreitung im Wesentlichen um 180° umgelenkt, sodass sie zu der zweiten Platte 7 gelangt, die auch als Lichtleiter ausgebildet ist. Um die Lichtstrahlen bei den Abschnitten 8 umzulenken, können diese ggf. bei der Oberfläche eine reflektierende Beschichtung aufweisen.

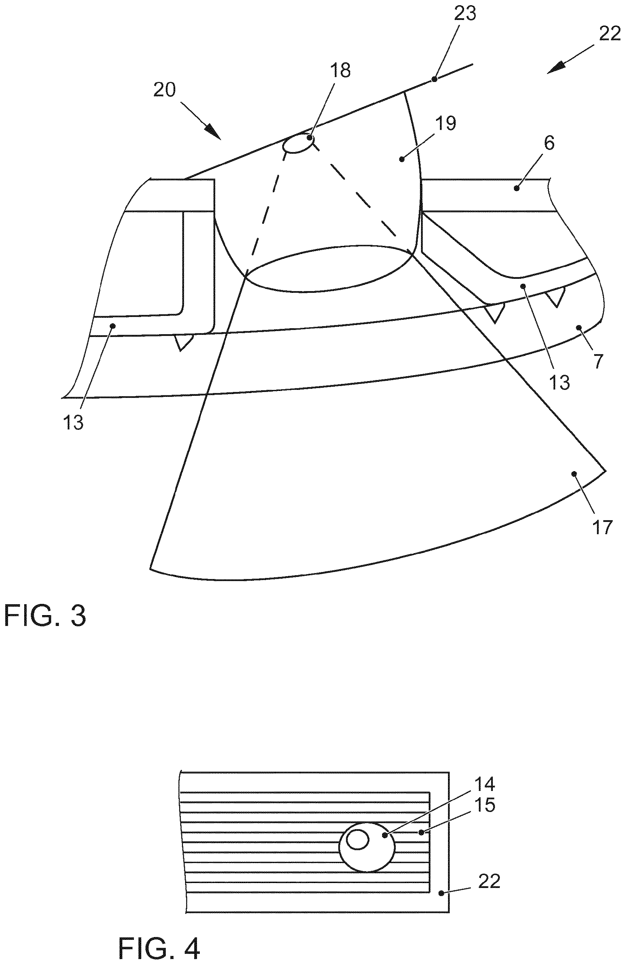

Weiterhin weist die erste Platte 6 des Lichtleitkörpers 4 eine Aussparung 9 auf. Die Funktion der Aussparung 9 wird später im Zusammenhang mit Figur 3 erläutert.

Die Fahrzeugleuchte 3 weist des Weiteren ein flächiges Maskierelement 13 auf. Beim Einbau der Fahrzeugleuchte 3 in dem Fahrzeug 1 ist dieses Maskierelement 13 so ausgerichtet, dass eine Seite des Maskierelements 13 zu einer dem Innenraum 2 des Fahrzeugs 1 abgewandten Seite und die andere Seite zu einer dem Innenraum 2 des Fahrzeugs 1 zugewandten Seite ausgerichtet ist. Ist die Fahrzeugleuchte 3, wie in Figur 1 gezeigt, horizontal ausgerichtet als Deckenleuchte eingebaut, ist das Maskierelement 13 im Wesentlichen horizontal ausgerichtet.

Das Maskierelement 13 ist zwischen den beiden Platten 6 und 7 des Lichtleitkörpers 4 angeordnet, wobei die Abschnitte 8 des Lichtleitkörpers 4 das Maskierelement 13 zumindest von zwei Seiten her umschließen. Die erste Platte 6 des Lichtleitkörpers 4 ist somit auf der dem Innenraum 2 des Fahrzeugs 1 abgewandten Seite des Maskierelements 13 angeordnet; die Platte 7 des Lichtleitkörpers 5 ist hingegen auf der dem Innenraum 2 des Fahrzeugs 1 zugewandten Seite des Maskierelements 13 angeordnet. Der Lichtleitkörper 5 erstreckt sich somit bei den Abschnitten 8 um das Maskierelement 13 herum, sodass die Lichtemission der ersten Lichtquelle 5 über die Lichteinkoppelfläche 10 in den Lichtleitkörper 4 eingekoppelt wird und dann von der dem Innenraum 2 des Fahrzeugs 1 abgewandten Seite zu der dem Innenraum 2 des Fahrzeugs 1 zugewandten Seite geleitet wird. Auf dieser Seite wird die Lichtemission dann ausgekoppelt wie es im Folgenden erläutert wird:

Die zweite Platte 7 weist Auskoppelstrukturen 15 auf, die so ausgebildet sind, dass das über die Abschnitte 8 der zweiten Platte 7 zugeführte Licht über die gesamte Fläche der zweiten Platte 7 homogen ausgekoppelt wird. In dem gezeigten Ausführungsbeispiel sind die Auskoppelstrukturen 15 auf der zu dem Maskierelement 13 benachbarten Seite der zweiten Platte 7 angeordnet. Die Lichtauskoppelstrukturen 15 reflektieren die Lichtstrahlen in der zweiten Platte 7, sodass sie auf der gegenüberliegenden Auskoppelfläche 16 der zweiten Platte 7 in den Innenraum 2 des Fahrzeugs 1 abgestrahlt werden. Die Auskoppelstrukturen 15 oder die Auskoppelfläche 16 können raue Flächen umfassen, um eine diffuse Lichtemission in den Innenraum 2 des Fahrzeugs 1 zu erzeugen. Bevorzugt weist die Auskoppelfläche 16 Linienstrukturen auf, über welche eine diffuse Lichtemission realisiert wird.

Das Maskierelement 13 ist lichtundurchlässig. Vom Innenraum 2 des Fahrzeugs 1 aus sieht der Betrachter somit nur die zweite Platte 7 des Lichtleitkörpers 5. Die erste Platte 6 und insbesondere die erste Lichtquelle 5 sind durch das Maskierelement 13 verdeckt, sodass sie für den Betrachter nicht sichtbar sind.

Ferner weist das Maskierelement 13 eine Öffnung 14 auf. Die Funktion der Öffnung 14 des Maskierelements 13 und der Aussparung 9 in dem Lichtleitkörper 4 werden nun mit Bezug zu Figur 3 näher erläutert:
Figur 3 zeigt eine Leuchteinheit 22, welche eine zweite Lichtquelle 18, eine Linse 19 und eine Trägerplatte 23 umfasst. Die zweite Lichtquelle 18 ist auf der Trägerplatte 23 befestigt und emittiert Licht in Richtung des Fahrzeuginnenraums 2. In Lichtemissionsrichtung vor der zweiten Lichtquelle 18 ist eine Linse 19 angeordnet, wobei die Linse 19 ebenso auf der Trägerplatte 23 befestigt ist. Die Linse 19 ist bevorzugt eine Fresnellinse. Die Linse 19 ist derart angeordnet, dass sie teilweise in der Aussparung 9 des Lichtleitkörpers 4 aufgenommen wird. Dabei weist sie zur Aussparung 9 entsprechende Dimensionen auf.

Um es zu ermöglichen, dass das von der zweiten Lichtquelle 18 emittierte Licht in den Fahrzeuginnenraum 2 gelangt, weist das Maskierelement 13 die bereits erwähnte Öffnung 14 auf. Im Ausführungsbeispiel ist die Linse 19 nicht nur derart angeordnet, dass sie von der Aussparung 9 des Lichtleitkörpers 4 aufgenommen wird, sondern auch derart angeordnet, dass sie von der Öffnung 14 in dem Maskierelement 13 aufgenommen wird. Dadurch kann die Linse 19 dicht bei der Lichtauskoppelfläche 16 bei der zweiten Platte 6 angeordnet werden. Dadurch wird gewährleistet, dass der Weg des von der zweiten Lichtquelle 18 emittierten Lichts nach Verlassen der Linse 19 in den Innenraum 2 des Fahrzeugs 1 so kurz wie möglich ist. Dadurch ist die Gefahr von ungewollter Streuung des von der zweiten Lichtquelle 18 emittierten Lichts minimal. Insbesondere ist die zweite Lichtquelle 18 wie die erste Lichtquelle 5 eine Leuchtdiode.

Die Wände der Öffnung 14 des Maskierelements 13 reichen bis an die Linse heran. Dadurch kann gewährleistet werden, dass die erste Platte 6 des Lichtleitkörpers an keiner Stelle vom Innenraum 2 des Fahrzeugs 1 aus sichtbar ist.

Der Lichtleitkörper 4 ist derart ausgebildet, dass das von der zweiten Lichtquelle 18 emittierte Licht nicht in die zweite Platte 7 eingekoppelt wird. Er weist also an der zweiten Platte 7 keine Lichteinkoppelfläche auf. Auch sind die Auskoppelstrukturen 15 an der Öffnung 14 des Maskierelements 13 unterbrochen. Dadurch wird verhindert, dass Lichtstrahlen des von der zweiten Lichtquelle 18 emittierten Lichts an den Auskoppelstrukturen gebrochen werden und dadurch in der zweiten Platte 7 hin und her gestreut werden. Insgesamt verhindert die Ausgestaltung, dass es zu Inhomogenitäten im Flächenlicht kommt, die durch ungewollt in den Lichtleitkörper eingekoppeltes Licht der zweiten Lichtquelle 18 verursacht werden.

Dadurch wird gewährleistet, dass das von der zweiten Lichtquelle 18 emittierte Licht nur durch die zweite Platte 7 durchtritt und ungestört in den Innenraum 2 des Fahrzeugs 1 vordringen kann. Dadurch kann dann ein definiertes Leuchtfeld 17 erzeugt werden.

Die Unterbrechung der Auskoppelstrukturen 15 ist in Figur 4 verdeutlicht. Figur 4 zeigt eine Ansicht der Fahrzeugleuchte 3 in Betrachtungsrichtung von dem Innenraum des Fahrzeugs zu der an der Decke des Fahrzeugs 1 befestigten Fahrzeugleuchte 3. Bei der Öffnung 14 des Maskierelements 13 enden die linienförmigen Auskoppelstrukturen 15.

Die erfindungsgemäße Fahrzeugleuchte 3 stellt also vorteilhafterweise eine Flächenlichtfunktion und gleichzeitig eine Leselichtfunktion bereit. Die Lichtfunktionen müssen nicht mehr separat voneinander im Innenraum des Fahrzeugs verbaut werden.

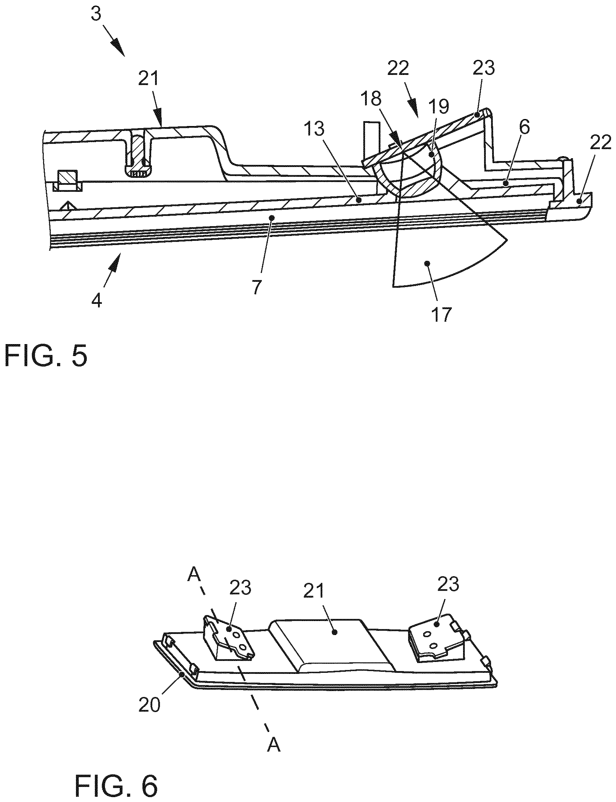

Figur 5 und Figur 6 zeigen die erfindungsgemäße Fahrzeugleuchte 3 in vollständig zusammengebautem Zustand. Figur 5 zeigt dabei einen Schnitt durch die Fahrzeugleuchte 3 entlang der Linie A - A aus Figur 6. Der Lichtleitkörper 4 wird dabei von einem Rahmen 21 aufgenommen. Der Rahmen 21 ist dabei derart angeordnet, dass er am Rand des Lichtleitkörpers 4 in Betrachtungsrichtung vom Fahrzeuginnenraum 2 in Richtung der Fahrzeugleuchte 3 vor dem Lichtleitkörper 4 angeordnet ist. Der Lichtleitkörper 4 wird also vom Rahmen 21 gehalten. Weiterhin umfasst die Fahrzeugleuchte 3 ein Gehäuse 20. Das Gehäuse 20 ist derart angeordnet, dass der Lichtleitkörper 4 und die zweite Lichtquelle 18 mit der Linse 19 zwischen dem Gehäuse 20 und dem Rahmen 21 eingeklemmt werden. Dadurch müssen keine separaten Teile zum Zusammenbau der Fahrzeugleuchte 3 verwendet werden.

Umfasst die Leuchteinheit keine Linse 19, so kann auch die zweite Lichtquelle 18 dicht bei der zweiten Platte 7 des Lichtleitkörpers 4 angeordnet werden.

Alternativ, und nicht gemäß der Erfindung, kann die Leuchteinheit 22 komplett oberhalb des Lichtleitkörpers 4 angeordnet sein.

Dann muss die erste Platte 6 keine Aussparung aufweisen. Dies kann allerdings zu erhöhter Streuung der die Leuchteinheit verlassenden Lichtstrahlen auf dem Weg in den Innenraum 2 des Fahrzeugs 1 führen.

Weiterhin ist die Ausführung des Lichtleitkörpers 4 lediglich beispielhaft. Der Lichtleitkörper kann beispielsweise auch lediglich eine Platte umfassen, in die das Maskierelement 13 eingebracht ist.

### Bezugszeichenliste

- 1: Fahrzeug
- 2: Innenraum des Fahrzeugs
- 3: Fahrzeugleuchte
- 4: Lichtleitkörper
- 5: Lichtquelle
- 6: erste Platte
- 7: zweite Platte
- 8: Abschnitt
- 9: Aussparung der ersten Platte
- 10: Lichteinkoppelfläche
- 11: Reflektor
- 12: optisches Umlenkelement
- 13: Maskierelement
- 14: Unterbrechung des Maskierelements
- 15: Auskoppelstrukturen
- 16: Lichtauskoppelfläche
- 17: Lichtemission
- 18: Lichtquelle
- 19: Linse
- 20: Gehäuse
- 21: Rahmen
- 22: Leuchteinheit
- 23: Trägerplatte

## Patentansprüche

1. Fahrzeugleuchte (3) zur Beleuchtung des Innenraums (2) des Fahrzeugs (1), mit
- zumindest einer ersten Lichtquelle (5),
- einem flächigen Maskierelement (13), dessen eine Seite zu einer dem Innenraum (2) des Fahrzeugs (1) abgewandten Seite ausgerichtet ist und dessen andere Seite zu einer dem Innenraum (2) des Fahrzeugs (1) zugewandten Seite ausgerichtet ist, und
- einem Lichtleitkörper (4), welcher eine Lichteinkoppelfläche (10) auf der dem Innenraum (2) des Fahrzeugs (1) abgewandten Seite des Maskierelements (13) aufweist, bei der die erste Lichtquelle (5) angeordnet ist und in welche die Lichtemission der ersten Lichtquelle (5) eingekoppelt wird, und welcher eine Lichtauskoppelfläche (16) auf der dem Innenraum (2) des Fahrzeugs (1) zugewandten Seite des Maskierelements (13) aufweist, bei welcher das eingekoppelte Licht in den Innenraum (2) des Fahrzeugs (1) ausgekoppelt wird, wobei sich der Lichtleitkörper (4) von der dem Innenraum (2) des Fahrzeugs (1) abgewandten Seite zu der dem Innenraum (2) des Fahrzeugs (1) zugewandten Seite um das Maskierelement (13) herum erstreckt, wobei
- das Maskierelement (13) zumindest eine Öffnung (14) aufweist und
- an der dem Fahrzeuginnenraum (2) abgewandten Seite des Maskierelements (13) zumindest eine zweite Lichtquelle (18) bei der Öffnung (14) angeordnet ist, deren Lichtemission durch die Öffnung (14) und durch den Lichtleitkörper (4) hindurch in den Fahrzeuginnenraum (2) gelangt, und
**dadurch gekennzeichnet, dass**
- der Lichtleitkörper (4) auf der dem Innenraum (2) des Fahrzeugs (1) abgewandten Seite des Maskierelements (13) eine Aussparung (9) benachbart zu der Öffnung (14) des Maskierelements (13) aufweist, welche die zweite Lichtquelle (18) zumindest teilweise aufnimmt.

2. Fahrzeugleuchte (3) nach Anspruch 1,
**dadurch gekennzeichnet, dass**
der Lichtleitkörper (4) zumindest zwei aneinandergefügte Platten (6, 7) umfasst, wobei die erste Platte (6) auf der dem Innenraum (2) des Fahrzeugs (1) abgewandten Seite des Maskierelements (13) und die zweite Platte (7) auf der dem Innenraum (2) des Fahrzeugs (1) zugewandten Seite des Maskierelements (13) angeordnet ist, wobei sich die Lichteinkoppelfläche (10) an der ersten Platte (6) und die Lichtauskoppelfläche (16) an der zweiten Platte (7) befindet und das Maskierelement (13) zwischen der ersten (6) und der zweiten Platte (7) angeordnet ist.

3. Fahrzeugleuchte (3) nach einem der Ansprüche 1 oder 2,
**dadurch gekennzeichnet, dass**
der Lichtleitkörper (4) an der dem Fahrzeuginnenraum (2) zugewandten Seite des Maskierelements (13) Auskoppelstrukturen (15) umfasst, welche eine flächige Lichtauskoppelung der Lichtemission der ersten Lichtquelle (5) bereitstellen, wobei bei der Öffnung (14) des Maskierelements (13) keine Auskoppelstrukturen (15) angeordnet sind.

4. Fahrzeugleuchte (3) nach Anspruch 3,
**dadurch gekennzeichnet, dass**
der Lichtleitkörper (4) derart ausgebildet ist, dass Licht, welches von der zweiten Lichtquelle (18) emittiert wird, nicht in den Lichtleitkörper (4) eingekoppelt wird.

5. Fahrzeugleuchte (3) nach einem der Ansprüche 1 bis 4,
**dadurch gekennzeichnet, dass**
die Fahrzeugleuchte (3) ein Gehäuse (20) und einen Rahmen (21) aufweist, wobei die erste Lichtquelle (5), der Lichtleitkörper (4) mit dem Maskierelement (13) und die zweite Lichtquelle (18) zwischen dem Gehäuse (20) und dem Rahmen (21) geklemmt gehalten werden.

6. Fahrzeugleuchte (3) nach einem der Ansprüche 1 bis 5,
**dadurch gekennzeichnet, dass**
in Lichtemissionsrichtung vor der zweiten Lichtquelle (18) eine Linse (19) angeordnet ist.

7. Fahrzeugleuchte (3) nach Anspruch 6,
**dadurch gekennzeichnet, dass**
die zweite Lichtquelle (18) oder die Linse (19) dicht bei der Lichtauskoppelfläche (16) des Lichtleitkörpers (4) angeordnet ist.

8. Fahrzeugleuchte (3) nach Anspruch 1,
**dadurch gekennzeichnet, dass**
die zweite Lichtquelle (18) ein Leselicht bereitstellt.

9. Fahrzeug (1) mit einer Fahrzeugleuchte (3) nach einem der Ansprüche 1 bis 8,
**dadurch gekennzeichnet, dass**
von der Fahrzeugleuchte (3) eine Decken- oder Himmelbeleuchtung bereitgestellt wird.

## Claims

1. Vehicle luminaire (3) for illuminating the interior (2) of the vehicle (1), comprising
- at least one first light source (5),
- a two-dimensional masking element (13), one side of which is oriented towards a side facing away from the interior (2) of the vehicle (1) and the other side of which is oriented towards a side facing the interior (2) of the vehicle (1), and
- a light-guiding body (4) having, on the side of the masking element (13) which faces away from the interior (2) of the vehicle (1), a light input-coupling face (10) near which the first light source (5) is arranged and into which the light emission of the first light source (5) is coupled, and having, on the side of the masking element (13) which faces the interior (2) of the vehicle (1), a light output-coupling face (16), in the case of which the coupled-in light is coupled out into the interior (2) of the vehicle (1), wherein the light-guiding body (4) extends around the masking element (13) from the side which faces away from the interior (2) of the vehicle (1) to the side which faces the interior (2) of the vehicle (1), wherein
- the masking element (13) has at least one opening (14) and
- at least one second light source (18), the light emission of which passes through the opening (14) and through the light-guiding body (4) into the vehicle interior (2), is arranged near the opening (14) on the side of the masking element (13) which faces away from the vehicle interior (2), and
**characterized in that**
- the light-guiding body (4) has, on the side of the masking element (13) which faces away from the interior (2) of the vehicle (1), a cutout (9) adjacent to the opening (14) of the masking element (13), which cutout at least partially receives the second light source (18).

2. Vehicle luminaire (3) according to Claim 1,
**characterized in that**
the light-guiding body (4) comprises at least two adjoining plates (6, 7), wherein the first plate (6) is arranged on the side of the masking element (13) which faces away from the interior (2) of the vehicle (1) and the second plate (7) is arranged on the side of the masking element (13) which faces the interior (2) of the vehicle (1), wherein the light input-coupling face (10) is located on the first plate (6) and the light output-coupling face (16) is located on the second plate (7) and the masking element (13) is arranged between the first plate (6) and the second plate (7).

3. Vehicle luminaire (3) according to either of Claims 1 and 2,
**characterized in that**
the light-guiding body (4) comprises, on the side of the masking element (13) which faces the vehicle interior (2), output-coupling structures (15) that provide two-dimensional light output coupling of the light emission of the first light source (5), wherein no output-coupling structures (15) are arranged near the opening (14) of the masking element (13).

4. Vehicle luminaire (3) according to Claim 3,
**characterized in that**
the light-guiding body (4) is designed such that light emitted by the second light source (18) is not coupled into the light-guiding body (4).

5. Vehicle luminaire (3) according to one of Claims 1 to 4,
**characterized in that**
the vehicle luminaire (3) has a housing (20) and a frame (21), wherein the first light source (5), the light-guiding body (4) with the masking element (13) and the second light source (18) are held clamped between the housing (20) and the frame (21).

6. Vehicle luminaire (3) according to one of Claims 1 to 5,
**characterized in that**
a lens (19) is arranged upstream of the second light source (18) in the light-emission direction.

7. Vehicle luminaire (3) according to Claim 6,
**characterized in that**
the second light source (18) or the lens (19) is arranged close to the light output-coupling face (16) of the light-guiding body (4).

8. Vehicle luminaire (3) according to Claim 1,
**characterized in that**
the second light source (18) provides a reading light.

9. Vehicle (1) having a vehicle luminaire (3) according to one of Claims 1 to 8,
**characterized in that**
headliner or dome illumination is provided by the vehicle luminaire (3).

## Revendications

1. Lampe de véhicule (3) destinée à l'éclairage de l'espace intérieur (2) du véhicule (1), comprenant
- au moins une première source de lumière (5),
- un élément de masquage (13) plat dont un côté est orienté vers un côté à l'opposé de l'espace intérieur (2) du véhicule (1) et dont l'autre côté est orienté vers un côté faisant face à l'espace intérieur (2) du véhicule (1), et
- un corps guide de lumière (4), lequel possède une surface d'injection de lumière (10) sur le côté de l'élément de masquage (13) à l'opposé de l'espace intérieur (2) du véhicule (1), au niveau de laquelle est disposée la première source de lumière (5) et dans laquelle est injectée l'émission lumineuse de la première source de lumière (5), et lequel possède une surface de découplage de lumière (16) sur le côté de l'élément de masquage (13) faisant face à l'espace intérieur (2) du véhicule (1), au niveau de laquelle la lumière injectée est découplée dans l'espace intérieur (2) du véhicule (1), le corps guide de lumière (4) s'étendant autour de l'élément de masquage (13) depuis le côté à l'opposé de l'espace intérieur (2) du véhicule (1) jusqu'au côté faisant face à l'espace intérieur (2) du véhicule (1),
- l'élément de masquage (13) possédant au moins une ouverture (14) et
- au moins une deuxième source de lumière (18) étant disposée au niveau de l'ouverture (14) sur le côté de l'élément de masquage (13) à l'opposé de l'espace intérieur de véhicule (2), dont l'émission lumineuse parvient dans l'espace intérieur de véhicule (2) en passant à travers l'ouverture (14) et à travers le corps guide de lumière (4), et
**caractérisée en ce que**
- le corps guide de lumière (4) possède, sur le côté de l'élément de masquage (13) à l'opposé de l'espace intérieur (2) du véhicule (1), un évidement (9) voisin de l'ouverture (14) de l'élément de masquage (13), lequel accueille au moins partiellement la deuxième source de lumière (18).

2. Lampe de véhicule (3) selon la revendication 1,
**caractérisée en ce que**
le corps guide de lumière (4) comporte au moins deux plaques (6, 7) jointes l'une contre l'autre, la première plaque (6) étant disposée sur le côté de l'élément de masquage (13) à l'opposé de l'espace intérieur (2) du véhicule (1) et la deuxième plaque (7) sur le côté de l'élément de masquage (13) faisant face à l'espace intérieur (2) du véhicule (1), la surface d'injection de lumière (10) se trouvant sur la première plaque (6) et la surface de découplage de lumière (16) sur la deuxième plaque (7) et l'élément de masquage (13) étant disposé entre la première (6) et la deuxième plaque (7).

3. Lampe de véhicule (3) selon l'une des revendications 1 et 2, **caractérisée en ce que** le corps guide de lumière (4) comporte, sur le côté de l'élément de masquage (13) faisant face à l'espace intérieur de véhicule (2), des structures de découplage (15) qui produisent un découplage de lumière à plat de l'émission lumineuse de la première source de lumière (5), aucune structure de découplage (15) n'étant disposée au niveau de l'ouverture (14) de l'élément de masquage (13).

4. Lampe de véhicule (3) selon la revendication 3, **caractérisée en ce que** le corps guide de lumière (4) est configuré de telle sorte que la lumière qui est émise par la deuxième source de lumière (18) n'est pas injectée dans le corps guide de lumière (4).

5. Lampe de véhicule (3) selon l'une des revendications 1 à 4, **caractérisée en ce que** la lampe de véhicule (3) possède un boîtier (20) et un cadre (21), la première source de lumière (5), le corps guide de lumière (4) avec l'élément de masquage (13) et la deuxième source de lumière (18) étant maintenus coincés entre le boîtier (20) et le cadre (21).

6. Lampe de véhicule (3) selon l'une des revendications 1 à 5, **caractérisée en ce qu'**une lentille (19) est disposée avant la deuxième source de lumière (18) dans la direction d'émission de la lumière.

7. Lampe de véhicule (3) selon la revendication 6, **caractérisée en ce que** la deuxième source de lumière (18) ou la lentille (19) est disposée proche de la surface de découplage de lumière (16) du corps guide de lumière (4).

8. Lampe de véhicule (3) selon la revendication 1, **caractérisée en ce que** la deuxième source de lumière (18) fournit une lumière de lecture.

9. Véhicule (1) comprenant une lampe de véhicule (3) selon l'une des revendications 1 à 8, **caractérisé en ce qu'**un éclairage de plafond ou d'habillage de plafond est fourni par la lampe de véhicule (3).
